# EUROPÄISCHE PATENTSCHRIFT

(11) **EP 3 080 505 B1**
(45) Veröffentlichungstag und Bekanntmachung des Hinweises auf die Patenterteilung: **28.02.2018**
(21) Anmeldenummer: 14771514.8
(22) Anmeldetag: 17.09.2014
(51) Int. Cl.: F16L 37/084, E03C 1/02, E03C 1/04

(54) **SCHLAUCHKUPPLUNG**
HOSE COUPLING
RACCORD DE TUYAU SOUPLE

(30) Priorität: 13.12.2013 DE 202013010988 U
(43) Veröffentlichungstag der Anmeldung: 19.10.2016
(73) Patentinhaber: Neoperl GmbH, 79379 Müllheim (DE)
(72) Erfinder: WILDFANG, Fabian, 79379 Müllheim (DE)
(74) Vertreter: Börjes-Pestalozza, Henrich
(86) Internationale Anmeldenummer: PCT/EP2014/002518
(87) Internationale Veröffentlichungsnummer: WO 2015/086097

(56) Entgegenhaltungen:
- EP-A1- 0 787 864
- WO-A1-00/53966
- DE-U1- 20 104 948
- DE-U1-202011 100 476
- US-A1- 2013 300 108

## Beschreibung

Die Erfindung betrifft eine Schlauchkupplung mit einem Kupplungsgehäuse, das zumindest zwei Kupplungsöffnungen hat, die im Kupplungsgehäuse miteinander verbunden sind, sowie mit mindestens zwei Kupplungsgegenstücken, die jeweils in eine der Kupplungsöffnungen einsetzbar und lösbar fixierbar sind, welche Kupplungsgegenstücke als Leitungsende eines Leitungsabschnitts ausgebildet sind und von denen wenigstens ein Kupplungsgegenstück als Leitungsende einer flexiblen Schlauchleitung vorgesehen ist.

Es ist bekannt, dass Sanitärarmaturen üblicherweise über eine Mischbatterie, in denen eine Kalt- und/oder eine Warmwasserzuleitung angeschlossen werden, verfügen. Es sind auch sanitäre Vorrichtungen bekannt, in denen Auszugsbrausen verwendet werden, bei denen die Wasserführung durch einen flexiblen Schlauch innerhalb der Armatur erfolgt und die mit dem Mischbatterieausgang verbunden sind. Im Allgemeinen handelt es sich bei solchen Anordnungen um bereits bekannte, sogenannte Armaturen mit ausziehbarem Wasserauslass, wie beispielsweise herausziehbare Küchen- oder Handbrausen.

Bei der Verwendung von Auszugsbrausen erfolgt die Verbindung zwischen Mischbatterieausgang und Brauseschlauch häufig mittels eines Rohres, das in der Regel aus metallischen Werkstoffen, wie beispielsweise Kupfer oder aus formunveränderbarem Kunststoff besteht, an dem entsprechende Kupplungsteile angebracht werden müssen. So fallen bei der Montage durch den Hersteller zeit- und kostenintensive Arbeitsschritte an, im Fall von metallischen Werkstoffen beispielsweise Löten. Zudem ist eine Demontage ebenfalls nur mit erheblichem Aufwand zu bewerkstelligen.

Dem Fachmann sind auch Verbindungen bekannt, die mittels Quetschverbindungen oder Quetschverschraubungen gehalten werden. Solche : Quetschverbindungen weisen jedoch den Nachteil auf, dass sie oftmals nur mangelhafte Dichtheit aufweisen, wodurch mitunter folgenschwere Schäden im Bereich der Installation auftreten können. Auch eine Demontage kann nur mit hohem Arbeitsaufwand erfolgen. Die bei Quetschverschraubungen in der Regel benötigten hohen Drehmomente können bei den üblicherweise vorherrschenden beengten Platzbedingungen - wenn überhaupt - nur unter erschwerten Bedingungen aufgebracht werden und erfordern in diesem Fall ebenfalls einen hohen Arbeitsaufwand. Es ist weiterhin bekannt, dass die beengten Platzverhältnisse ferner den Nachteil mit sich bringen, dass die Führung der Auszugsbrauseschläuche durch die Armatur ebenfalls nur mit erheblichem Aufwand bewältigt werden kann.

Durch die Existenz verschiedener länderspezifischer gesetzlicher Anforderungen, beispielsweise in Bezug auf zulässige Werkstoffe, geforderte Durchflussraten sowie erforderliche Trinkwasserabsicherungen, bedeutet es für den Armaturenhersteller zusätzlich einen nicht unerheblichen logistischen Aufwand, die jeweiligen Armaturen derart auszulegen, dass die verschiedenen Anforderungen erfüllt werden.

Aus Figur 16b der US 2013/300108 A1 ist bereits eine gattungsgemäße Schlauchkupplung der eingangs erwähnten Art vorbekannt. Die vorbekannte Schlauchkupplung hat ein Kupplungsgehäuse, das zumindest zwei Kupplungsöffnungen aufweist, die im Kupplungsgehäuse miteinander verbunden sind. Der vorbekannten Schlauchkupplung sind auch wenigstens zwei Kupplungsgegenstücke zugeordnet, die jeweils in eine der Kupplungsöffnungen einsetzbar und dort lösbar fixierbar sind. Da die aus US 2013/300108 A1 vorbekannte Schlauchkupplung zumindest zwei weibliche Kupplungsöffnungen hat, können die Kupplungsgegenstücke wahlweise mit einer der Kupplungsöffnungen verbunden werden. Jedes der Kupplungsgegenstücke ist als Leitungsende eines Leitungsabschnitts ausgebildet, wobei wenigstens ein Kupplungsgegenstück als Leitungsende einer flexiblen Schlauchleitung vorgesehen ist. Die aus US 2013/300108 A1 vorbekannte Schlauchkupplung ist auf die Funktion einer Schnellkupplung beschränkt, mit der benachbarte Leitungsabschnitte rasch miteinander verbunden oder voneinander gelöst werden können.

Aus der WO 00/53966 A1 sowie der DE 20 2011 100 476 U1 kennt man bereits Schlauchkupplungen, die ein weibliches Kupplungsstück haben, das mit einem männlichen Kupplungsgegenstück lösbar verbindbar ist. Sowohl das Kupplungsstück als auch das Kupplungsgegenstück weisen einen Schlauchnippel auf, auf den das Schlauchende einer flexiblen Schlauchleitung aufschiebbar ist. Mit Hilfe dieser vorbekannten Schlauchkupplungen können also die benachbarten Schlauchenden zweier Leitungsabschnitte verbunden werden, die jeweils als flexible Schlauchleitungen ausgestaltet sind.

Aus der EP 0787864 A1 sowie der DE 20104948 U1 kennt man bereits sogenannte Rückflussverhinderer, die in eine Fluidleitung einsetzbar sind, um ein Durchströmen des Fluids durch die Fluidleitung nur in einer definierten Richtung sicherzustellen. Solche Rückflussverhinderer lassen ein Durchströmen des Fluids nur in einer Richtung zu, während ein Durchfließen des Fluids in die andere Richtung unterbunden wird. Die aus EP 0787864 A1 und DE 201404948 U1 vorbekannten Rückflussverhinderer sind als Einsetzpatronen ausgebildet, die sich jeweils in eine Patronengehäuseaufnahme der Fluidleitung einsetzen lassen.

Der vorliegenden Erfindung liegt daher insbesondere die Aufgabe zugrunde, eine Schlauchkupplung der eingangs erwähnten Art zu schaffen, die auch dem ungeübten Anwender selbst unter beengten Platzverhältnissen die einfache Verbindung einer flexiblen Schlauchleitung mit zumindest einem: benachbarten Leitungsabschnitt erlaubt.

Die erfindungsgemäße Lösung dieser Aufgabe besteht bei der Schlauchkupplung der eingangs erwähnten Art insbesondere darin, dass die Kupplungsöffnungen unterschiedlich ausgestaltet sind zum Einsetzen nur des zugeordneten und entsprechend geformten Kupplungsgegenstücks, dass im Kupplungsgehäuse zwischen den Kupplungsöffnungen mindestens eine sanitäre Einsetzpatrone eingesetzt ist, und dass die mindestens eine sanitäre Einsetzpatrone als Durchflussmengenregler, Durchflussbegrenzer und/oder als Rückflussverhinderer ausgebildet ist.

Die erfindungsgemäße Schlauchkupplung ist zwischen einer flexiblen Schlauchleitung und zumindest einem benachbarten Leitungsabschnitt einsetzbar. Die Schlauchkupplung weist dazu ein Kupplungsgehäuse auf, das zumindest zwei Kupplungsöffnungen hat, die im Kupplungsgehäuse miteinander verbunden sind. In jede der Kupplungsöffnungen ist ein Kupplungsgegenstück einsetzbar und lösbar fixierbar. Diese Kupplungsgegenstücke der erfindungsgemäßen Schlauchkupplung sind jeweils als Leitungsende eines Leitungsabschnitts ausgebildet, wobei zumindest einer dieser Leitungsabschnitte durch die Schlauchleitung gebildet wird. Die Kupplungsöffnungen der erfindungsgemäßen Schlauchkupplung sind unterschiedlich ausgestaltet zum Einsetzen nur des zugeordneten und komplementär geformten Kupplungsgegenstücks. Die zugeordneten und miteinander zu verbindenden Kupplungsgegenstücke sind somit derart unterschiedlich ausgebildet, dass sie nur in die ihnen zugeordnete Kupplungsöffnung passen. Da ein vertauschtes Einsetzen der Kupplungsgegenstücke somit nicht möglich ist, wird ein irrtümlich verdrehtes Einsetzen der Schlauchkupp-lung vermieden. Um die Leistungscharakteristik und/oder die Fließrichtung des durchströmenden Wassers zu beeinflussen, ist im Kupplungsgehäuse zwischen den Kupplungsöffnungen mindestens eine sanitäre Einsetzpatrone eingesetzt, die als Durchflussmengenregler, als Durchflussbegrenzer und/oder als Rückflussverhinderer ausgebildet ist. Dabei kann die Einsetzpatrone eine der genannten Funktionen oder eine beliebige Auswahl dieser Funktionen beinhalten. Da bei der erfindungsgemäßen Schlauchkupplung ein irrtümlich verdrehtes Einsetzen der Schlauchkupplung mit Sicherheit vermieden wird, wird auch ein Durchströmen der Einsetzpatrone in eine der bestimmungsgemäßen Fließrichtung entgegengesetzte: Richtung mit Sicherheit verhindert. Fehlbedienungen durch ungeübte Anwender sind dadurch ausgeschlossen.

Eine besonders einfache und platzsparende Ausführungsform gemäß der Erfindung sieht vor, dass das vorzugsweise hülsenförmige Kupplungsgehäuse an seinen Hülsenenden stirnseitig jeweils eine Kupplungsöffnung aufweist. Ein hülsenförmiges Kupplungsgehäuse ist vergleichsweise kompakt ausgebildet und begünstigt, die einfache Montage und Demontage auch unter beengten Platzverhältnissen. Da die Kupplungsöffnungen an den Gehäuseenden stirnseitig angeordnet sind, lassen sich die zugeordneten Leitungsabschnitte praktisch in Verlängerung zueinander verbinden.

Um eine einfache Montage und Demontage auch ohne Werkzeug zu begünstigen; sieht eine weiterbildende Ausführungsform gemäß der Erfindung vor, dass jeder Kupplungsöffnung ein Halteelemente zugeordnet ist, welche Halteelemente zwischen einer Entriegelungsstellung und einer Verriegelungsstellung bewegbar sind, in welcher Verriegelungsstellung das betreffende Halteelement das zugeordnete Kupplungsgegenstück in der Kupplungsöffnung fixiert.

Eine besonders einfach handhabbare Ausführungsform gemäß der Erfindung sieht vor, dass zumindest ein Halteelement durch Drücken vorzugsweise gegen eine Rückstellkraft von der Verriegelungs- in die Entriegelungsstellung bewegbar ist.

Um die erfindungsgemäße Schlauchkupplung auch einhändig bedienen zu können, ist es vorteilhaft, wenn das Kupplungsgehäuse mit einer Hand umgreifbar ausgestaltet ist und wenn dabei zumindest ein Halteelement mit dem Daumen dieser Hand betätigbar ist. Bei dieser Ausführungsform bleibt die andere Hand frei, um beispielsweise das Schlauchende mit seinem Kupplungsgegenstück in die entsprechende Kupplungsöffnung der erfindungsgemäßen Schlauchkupplung einsetzen zu können.

Eine besonders einfach handhabbare und auch vom ungeübten Anwender werkzeuglos bedienbare Ausführungsform gemäß der Erfindung sieht vor, dass zumindest ein Halteelement als Halteschieber ausgebildet ist, der in einem quer zur Einsetzrichtung des Kupplungsgegenstücks orientierten und die zugeordnete Kupplungsöffnung durchsetzenden Schiebekanal zwischen der Entriegelungsstellung und der Verriegelungsstellung verschieblich geführt ist.

Um auf das Halteelement eine entsprechende Rückstellkraft ausüben zu können, ist es vorteilhaft, wenn an zumindest einem Halteschieber wenigstens ein Federsteg angeformt ist, der als Rückstellkraft dient, und dazu sich beim Drücken auf den Halteschieber mit seinem freien Stegende gegen das Gehäuse abstützt und unter elastischer Verformung vorspannt. Bei dieser Ausführungsform wird der zumindest eine, an den Halteschieber angeformte Federsteg derart elastisch verformt und vorgespannt, dass nach einer Druckentlastung dieser Halteschieber durch die vom Federsteg ausgeübte Rückstellkraft sich von der Entriegelungsstellung in die Verriegelungsstellung verschieben kann.

Um die Handhabung der erfindungsgemäßen Schlauchkupplung zu erleichtern und um dem Anwender eine Rückmeldung zu geben, wenn das Kupplungsgegenstück einer Schlauchleitung sicher und fest in der zugeordneten Kupplungsöffnung einrastet, ist es vorteilhaft, wenn die Rückstellkraft derart auf das Halteelement einwirkt,dass das Halteelement bei Druckentlastung und Einsetzen des Kupplungsgegenstücks in die Kupplungsöffnung deutlich hörbar von der Entriegelungsstellung in die Verriegelungsstellung zurückspringt.

Die Betätigung des als Halteschieber ausgebildeten Halteelements wird wesentlich erleichtert, wenn zumindest ein Schieberende des Halteschiebers als ein Betätigungstaster ausgebildet ist und wenn dieser Betätigungstaster seitlich am Kupplungsgehäuse beaufschlagbar und vorzugsweise in einer Tasteraufnahme angeordnet ist.

Um das Kupplungsgegenstück sicher in der zugeordneten Kupplungsöffnung am Kupplungsgehäuse der erfindungsgemäßen Schlauchkupplung fixieren zu können, ist es vorteilhaft, wenn an zumindest einem Kupplungsgegenstück ein Hinterschnitt vorgesehen ist, den das Halteelement in der Verriegelungsstellung hintergreift.

Damit das Kupplungsgegenstück in die zugeordnete Kupplungsöffnung des Kupplungsgehäuses in jeder beliebigen Drehstellung eingesetzt und dort fixiert werden kann, ist es vorteilhaft, wenn an zumindest einem Kupplungsgegenstück ein umlaufender Ringabsatz vorgesehen ist, der den Hinterschnitt bildet.

Das am Schlauchende einer flexiblen Schlauchleitung vorgesehene Kupplungsgegenstück lässt sich besonders einfach und mit geringem Aufwand in der zugeordneten Kupplungsöffnung der erfindungsgemäßen Schlauchkupplung einsetzen, wenn zumindest einer der Halteschieber eine Durchstecköffnung aufweist, und wenn am Kupplungsgegenstück und/oder an dem die Durchstecköffnung begrenzenden Randbereich des Halteschiebers eine Auflaufschräge vorgesehen ist, die eine Einsetzbewegung des Kupplungsgegenstücks in die Durchstecköffnung in eine Schiebebewegung des Halteschiebers von der Verriegelungsstellung in die Entriegelungsstellung umsetzt. Bei dieser Ausführungsform muss das Kupplungsgegenstück lediglich in die Kupplungsöffnung und in die im Bereich der Kupplungsöffnung vorgesehene Durchstecköffnung des Halteschiebers eingeschoben werden, damit der Halteschieber nach Einreichen der Entriegelungsstellung den Hinterschnitt am Kupplungsgegenstück vorzugsweise deutlich hörbar hintergreifen und sichern kann.

Die einfache Herstellung der erfindungsgemäßen Schlauchkupplung wird noch begünstigt, wenn das Kupplungsgehäuse als Kunststoffspritzgussteil ausgebildet und/oder wenigstens ein Kupplungsgegenstück aus Metall und insbesondere aus Messing hergestellt ist.

Um die mit der erfindungsgemäßen Schlauchkupplung bewerkstelligte Anbindung mit dem Leitungsende einer benachbarten Versorgungsleitung zu bewerkstelligen, kann es vorteilhaft sein, wenn im Bereich zumindest einer Kupplungsöffnung wenigstens eine Ringdichtung vorgesehen ist, die zwischen dem Gehäuseinnenumfang des Kupplungsgehäuses und dem in diese Kupplungsöffnung eingeschobenen Kupplungsgegenstück abdichtet. Bei dieser Ausführungsform werden Leckagen im Bereich der Kupplungsöffnung mit Sicherheit vermieden.

Um dabei die Ringdichtung unverlierbar in der erfindungsgemäßen Schlauchkupplung sichern zu können, ist es vorteilhaft, wenn die wenigstens eine Ringdichtung zwischen einem am Gehäuseinnenumfang vorgesehenen Ringabsatz und einer Einschubhülse axial gesichert ist, welche Einschubhülse in die Kupplungsöffnung einsetzbar und am Gehäuseinnenumfang fixierbar ist.

Da die Versorgungsleitung insbesondere im Bereich der Schlauchkupplung besonderen Belastungen ausgesetzt sein kann, ist es vorteilhaft, wenn am Gehäuseaußenumfang zumindest eine Versteifungsrippe vorgesehen ist und wenn vorzugsweise wenigstens eine der Versteifungsrippen die Tasteraufnahmen miteinander verbindet. Dabei wirkt eine solche Versteifungsrippe Querbelastungen entgegen, die quer zur Längserstreckung der erfindungsgemäßen Schlauchkupplung auf das Kupplungsgehäuse einwirken können.

Weiterbildungen gemäß der Erfindung ergeben sich aus der Zeichnung in Verbindung mit den Ansprüchen sowie der Figurenbeschreibung. Nachstehend wird die Erfindung anhand eines bevorzugten Ausführungsbeispieles noch näher beschrieben.

Es zeigt:
- Figur 1: eine in einer perspektivischen Ansicht gezeigte Schlauchkupplung, die hier zum Verbinden von zwei flexiblen Schlauchleitungen dient, von denen zumindest eine Schlauchleitung den Auszugsschlauch einer als Auszugsbrause ausgestalteten sanitären Auslaufarmatur bildet,
- Figur 2: die als Auszugsbrause ausgestaltete Auslaufarmatur mit der in Figur 1 gezeigten Schlauchkupplung,
- Figur 3: die Schlauchkupplung aus Figur 1 und 2 in einem vergrößerten Längsschnitt,
- Figur 4: die Schlauchkupplung aus Figur 1 bis 3 in einem Teil-Längsschnitt, wobei eine der Schlauchleitungen aus der längsgeschnitten dargestellten Kupplungsöffnung entnommen ist,
- Figur 5: die Schlauchkupplung aus Figur 4 in einer Detaildarstellung im Bereich der längsgeschnitten gezeigten Kupplungsöffnung,
- Figur 6: die Schlauchkupplung aus den Figuren 4 und 5 in einer auseinander gezogenen Darstellung ihrer, im Bereich einer der Kupplungsöffnungen erforderlichen Bestandteile,
- Figur 7: die Schlauchkupplung aus Figur 6 in einer Detaildarstellung im Bereich einer der Kupplungsöffnungen,
- Figur 8: die Schlauchkupplung aus Figur 1 bis 7 in einem Teil-Längsschnitt, wobei sich der einer Kupplungsöffnung zugeordnete Halteschieber in einer Entriegelungsstellung befindet,
- Figur 9: die Schlauchkupplung aus Figur 8 in einem Detail-Längsschnitt im Bereich der den in seiner Entriegelungsstellung befindlichen Halteschieber aufweisenden Kupplungsöffnung,
- Figur 10: die Schlauchkupplung aus den Figuren 1 bis 9 in einem Teil-Längsschnitt, wobei sich einer der hier als Halteschieber ausgebildeten Halteelemente in seiner Verriegelungsstellung befindet,
- Figur 11: die Schlauchkupplung aus Figur 10 in einem Detail-Längsschnitt im Bereich der den in seiner Verriegelungsstellung befindlichen Halteschieber aufweisenden Kupplungsöffnung,
- Figur 12: die Schlauchkupplung aus den Figuren 1 bis 11 in einem Teil-Längsschnitt, wobei sich der Halteschieber in seiner Verriegelungsstellung befindet, in welche er einen am Außenumfang eines Kupplungsgegenstück umlaufenden Hinterschnitt hintergreift,
- Figur 13: die Schlauchkupplung aus Figur 12 in einem Detail-Längsschnitt im Bereich der den in seiner Verriegelungsstellung befindlichen Halteschieber aufweisenden Kupplungsöffnung,
- Figur 14: die Schlauchkupplung aus den Figuren 1 bis 13 in einem Teil-Längsschnitt, wobei der Halteschieber gegen eine Rückstellkraft derart in eine Entriegelungsstellung gepresst ist, dass das entsprechende und am Schlauchende einer flexiblen Schlauchleitung vorgesehene Kupplungsgegenstück aus der zugeordneten Kupplungsöffnung der Schlauchkupplung entnehmbar ist,
- Figur 15: die Schlauchkupplung aus Figur 14 in einem Detail-Längsschnitt im Bereich der den in seine Entriegelungsstellung gedrückten Halteschieber aufweisenden Kupplungsöffnung,
- Figur 16: die Schlauchkupplung aus den Figuren 1 bis 15 in einem Teil-Längsschnitt, wobei das Kupplungsgegenstück bereits geringfügig aus der Kupplungsöffnung gezogen ist,
- Figur 17: die Schlauchkupplung aus Figur 16 in einem Detail-Längsschnitt im Bereich des bereits geringfügig aus der Kupplungsöffnung gezogenen Halteschiebers,
- Figur 18: die Schlauchkupplung aus den Figuren 1 bis 17 in einer auseinandergezogenen Perspektivdarstellung ihrer Bestandteile, und
- Figur 19: eine in einer Perspektivdarstellung gezeigte Schlauchkupplung, die mit der in den Figuren 1 bis 18 dargestellten Schlauchkupplung vergleichbar ausgestaltet ist, wobei aber an ihrem Kupplungsgehäuse außenseitig Versteifungsrippen vorgesehen sind, die das Kupplungsgehäuse dieser Schlauchkupplung quer zur Gehäuse-Längserstreckung aussteifen.

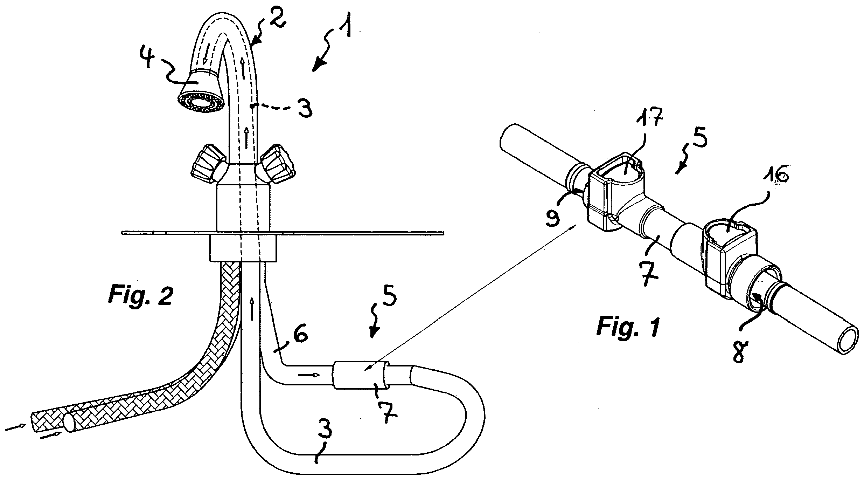

In Figur 2 ist eine sanitäre Auslaufarmatur 1 dargestellt, die als Auszugs- oder als Küchenbrause ausgebildet ist. Die Auslaufarmatur 1 hat ein Auslaufrohr 2, in dem eine flexible Schlauchleitung 3 derart verschieblich geführt ist, dass diese Schlauchleitung 3 aus dem Auslaufrohr 2 herausgezogen oder auch hineingeschoben werden kann, bis der am außenliegenden Schlauchende vorgesehene und als Wasserauslauf dienende Brausekopf 4 am Rohrende des Auslaufrohres 2 anschlägt.

In Figur 2 ist erkennbar, dass die im Auslaufrohr 2 verschieblich geführte Schlauchleitung 3 über eine Schlauchkupplung 5 mit einem benachbarten Leitungsabschnitt 6 verbunden werden kann. Dieser benachbarte Leitungsabschnitt 6 kann als Anschlussstuzen, als formstabiles Leitungsrohr oder - wie hier - ebenfalls als flexible Schlauchleitung ausgestaltet sein.

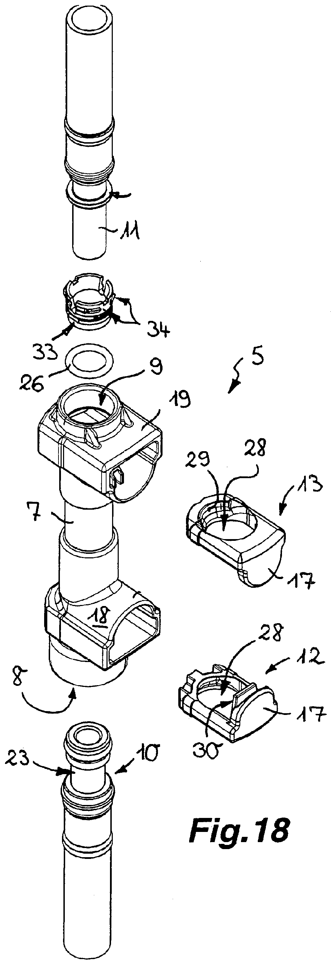

Die in den Figuren 1 bis 18 näher dargestellte Schlauchkupplung 5 ist zwischen der flexiblen Schlauchleitung 3 und dem zumindest einen benachbarten Leitungsabschnitt 6 einsetzbar. Die Schlauchkupplung 5 weist dazu ein Kupplungsgehäuse 7 auf, das zumindest zwei Kupplungsöffnungen 8, 9 hat, die im Kupplungsgehäuse 7 miteinander verbunden sind. In jede der Kupplungsöffnungen 8, 9 ist ein Kupplungsgegenstück 10 beziehungsweise 11 einsetzbar und lösbar fixierbar. Diese Kupplungsgegenstücke 10, 11 der Schlauchkupplung 5 sind jeweils als Leitungsende eines Leitungsabschnitts 3, 6 ausgebildet, wobei zumindest der eine Leitungsabschnitt durch die flexible Schlauchleitung 3 gebildet wird.

In den Figuren 1 und 3 bis 18 ist erkennbar, dass das Kupplungsgehäuse 7 an seinen Hülsenenden stirnseitig jeweils eine Kupplungsöffnung 8, 9 aufweist. Dabei ist jeder Kupplungsöffnung 8, 9 ein Halteelement 12, 13 zugeordnet. Diese Halteelemente 12, 13 sind zwischen einer Entriegelungsstellung und einer Verriegelungsstellung bewegbar, wobei in der Verriegelungsstellung das betreffende Halteelement 12, 13 das zugeordnete Kupplungsgegenstück 10, 11 in der Kupplungsöffnung 8, 9 fixiert.

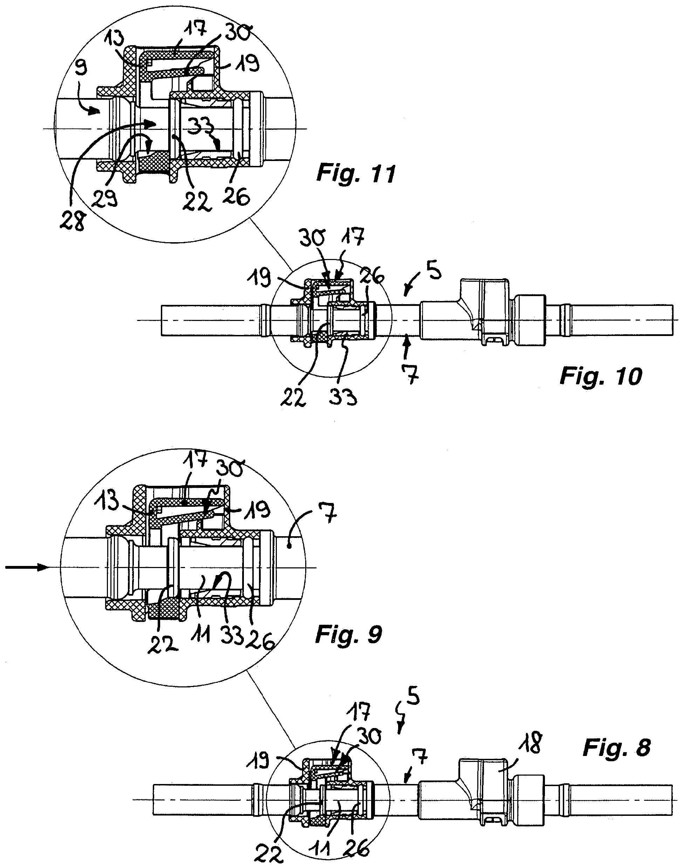

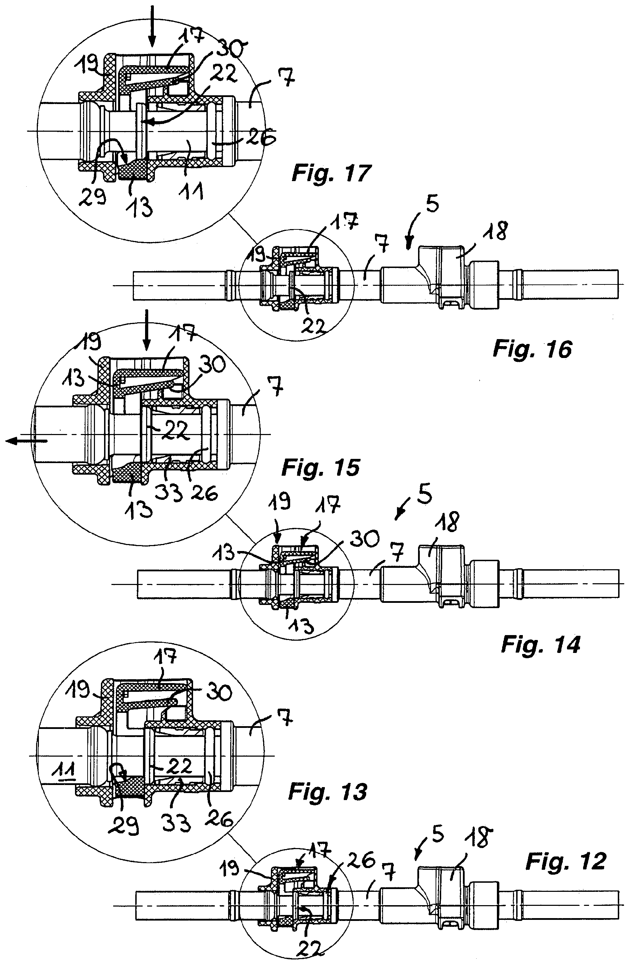

Die Halteelemente 12, 13 sind hier als Halteschieber ausgebildet, die jeweils in einem quer zur Einsteckrichtung des Kupplungsgegenstücks 10, 11 orientierten und die jeweilige Kupplungsöffnung 8, 9 durchsetzenden Schieberkanal 14, 15 zwischen der Entriegelungsstellung und der Verriegelungsstellung verschieblich geführt sind. Die als Halteelemente 12, 13 dienenden Halteschieber sind an ihrem einen, seitlich am Kupplungsgehäuse 7 beaufschlagbaren Schieberende als Betätigungstaster 16, 17 ausgebildet, der dort in einer Tasteraufnahme 18, 19 des Kupplungsgehäuses 7 geschützt angeordnet ist. Die hier dargestellten Kupplungsgegenstücke 10, 11 weisen einen Hinterschnitt auf, den das zugeordnete Halteelement 12, 13 in der Verriegelungsstellung hintergreift. Dieser Hinterschnitt ist als umlaufender Ringabsatz 20, 21 ausgebildet, welcher Ringabsatz durch einen am Kupplungsgegenstück 10, 11 radial vorstehenden Ringflansch 22 oder eine Ringnut 23 gebildet sein kann.
Die hier als Halteschieber ausgebildeten Haltelemente 12, 13 sind durch Drücken gegen eine Rückstellkraft von der beispielsweise in den Figuren 11 bis 13 gezeigten Verriegelungsstellung in die in den Figuren 14 bis 17 dargestellte Entriegelungsstellung bewegbar. Jeder der als Halteschieber ausgebildeten Halteelemente 12, 13 weist eine Durchstecköffnung 28 auf. Dabei ist an dem die Durchstecköffnung 28 umgrenzenden und der Kupplungsöffnung 8 oder 9 zugewandten Randbereich der Halteschieber 12, 13 eine Auflaufschräge 29 vorgesehen, die - wie in den Figuren 8 und 9 erkennbar ist - eine Einsetzbewegung des Kupplungsgegenstücks 10 oder 11 in die Durchstecköffnung 28 in eine Schiebebewegung des Halteschiebers 12 oder 13 von der Verriegelungsstellung gegen die Rückstellkraft in die Entriegelungsstellung umsetzt. Dabei wirkt die Rückstellkraft derart auf das Halteelement 12, 13 ein, dass das Halteelement 12, 13 bei Druckentlastung und Einsetzten des Kupplungsgegenstücks 10, 11 in die Kupplungsöffnung 8, 9 deutlich hörbar von der Entriegelungsstellung in die Verriegelungsstellung zurückspringt.

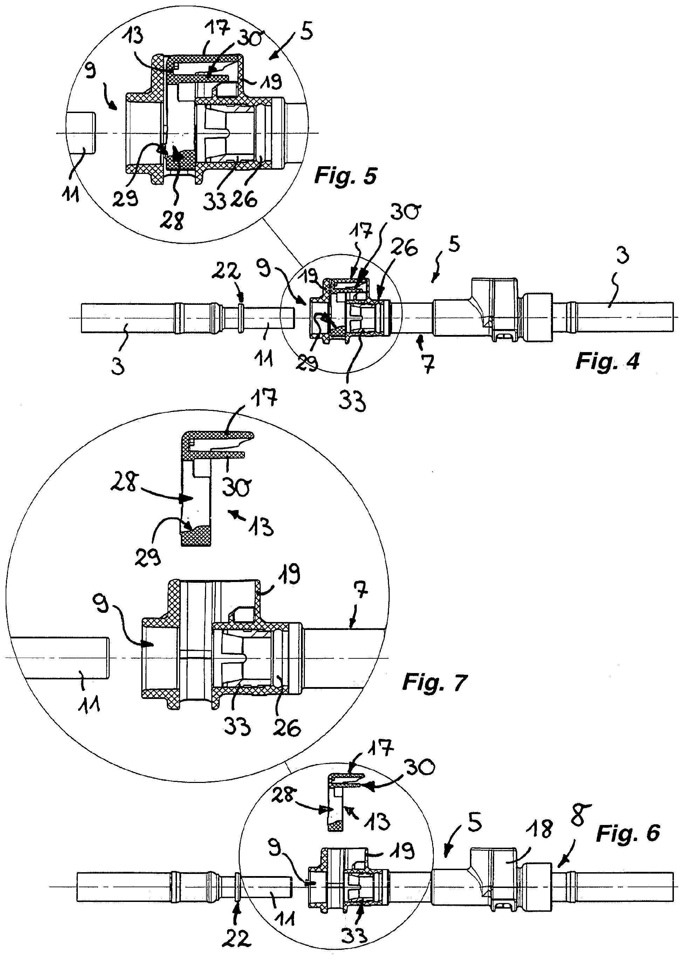

An jedem, als Halteschieber ausgebildeten Halteelemente 12, 13 ist wenigstens ein Federsteg 30 angeformt, der als Rückstellkraft dient. Aus einem Vergleich der Figuren 4 und 5 einerseits und der Figuren 8 und 9 andererseits wird deutlich, dass der Federsteg 30 sich mit seinem freien Stegende beim manuellen Drücken auf den Halteschieber gegen das Kupplungsgehäuse 7 abstützt und unter elastischer Verformung vorspannt. Diese Vorspannung wird beim Rückspringen des Halteschiebers in seine Verriegelungsstellung wieder aufgelöst.

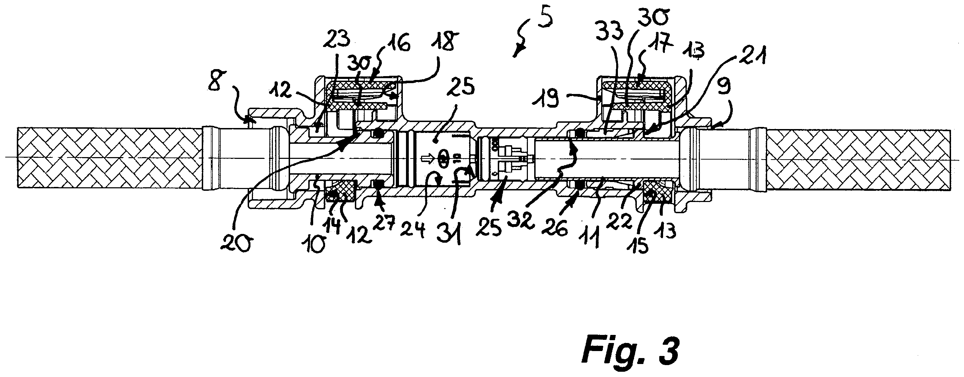

Das Kupplungsgehäuse 7 sowie die als Halteschieber ausgestalteten Halteelemente 12, 13 sind hier als Kunststoffspritzgussteile ausgebildet. Die Kupplungsgegenstücke 10, 11 sind als metallene Drehteile vorzugsweise aus Messing hergestellt. In Figur 3 ist erkennbar, dass im Kupplungsgehäuse 7 zwischen den Kupplungsöffnungen 8, 9 wenigstens eine Patronenaufnahme 24 zur Aufnahme wenigstens einer sanitären Einsetzpatrone 25 vorgesehen ist, wobei die zumindest eine Einsetzpatrone 25 von einer der Kupplungsöffnungen 8 aus in das Kupplungsgehäuse 7 eingesetzt werden kann. Die sanitäre Einsetzpatrone weist einen Durchflussmengenregler, einen Durchflussbegrenzer oder - wie hier - einen Rückflussverhinderer auf, der einen unerwünschten Rückstrom des durch die Schlauchkupplung durchströmenden Wassers verhindert. Das in den Figuren 1 bis 18 gezeigte Ausführungsbeispiel weist hier zwei, als doppelte Absicherung dienende und in gleicher Durchströmrichtung wirksame Rückflußverhinderer auf, die jeweils eine Einsetzpatrone 25 bilden und die durch die gegenüberliegenden Kupplungsöffnungen 9 hindurch bis zu einem Ringflansch 31 in das Kupplungsgehäuse 7 der Schlauchkupplung 5 eingeschoben werden können.

Die hier dargestellte Schlauchkupplung 7 ist als Funktionsdoppelkupplung ausgebildet, die beispielsweise mit dem Ausgang einer Mischbatterie einerseits und dem Brauseschlauch 3 andererseits verbunden werden kann. Dazu weist die Schlauchkupplung zwei unterschiedlich ausgestaltete Kupplungsöffnungen 8, 9 auf, in die entsprechend ausgebildete Kupplungsgegenstücke 10, 11 einsetzbar sind. Auf diese Art und Weise wird die Verwendung eines formstabilen Rohres am Ausgang der Mischbatterie entbehrlich, wobei stattdessen flexible Schläuche mit einem geeigneten Kupplungsgegenstück verwendet werden können. Auf diese Weise wird die Montage und Demontage der sanitären Auslaufarmatur 1 und ihrer Wasseranschlüsse auch für den ungeübten Anwender deutlich vereinfacht.

Da die Kupplungsöffnungen 8, 9 unterschiedlich ausgebildet sind, wird eine falsche Montage der Schlauchkupplung 5 verhindert. Aufgrund der unterschiedlich ausgebildeten Kupplungsgegenstücke 10, 11 ist es auch nicht möglich, die Schlauchkupplung 5 wegzulassen und die Leitungsabschnitte 3, 6 mit installationsüblichen Mitteln kurzzuschließen. Die kompakte Bauform der hier dargestellten Schlauchkupplung 5 ermöglicht eine vereinfachte, werkzeuglose Montage auch unter beengten Platzverhältnissen.

In Figur 3 ist erkennbar, dass die als Funktionsdoppelkupplung ausgebildete Schlauchkupplung 5 Kupplungsöffnungen 8, 9 mit unterschiedlichem lichten Durchmesser aufweist. Die lichten Durchmesser dieser Kupplungsöffnungen 8, 9 können aber auch identisch sein. In Figur 3 ist auch erkennbar, dass im Bereich zumindest einer Kupplungsöffnung 8, 9 wenigstens eine Ringdichtung vorgesehen ist, die zwischen den Gehäuseinnenumfang des Kupplungsgehäuses 7 und dem in diese Kupplungsöffnung eingeschobenen Kupplungsgegenstück abdichtet. Die hier als Dichtungsring 26 ausgebildete und in der Kupplungsöffnung 9 vorgesehene Ringdichtung ist zwischen einem am Gehäuseinnenumfang vorgesehenen Ringabsatz 32 und einer Einschubhülse 33 axial gesichert, die in die Kupplungsöffnung 9 einsetzbar und am Gehäuseinnenumfang fixierbar ist. An der Einschubhülse 33 sind dazu zwei voneinander beabstandete Rastvorsprünge 34 vorgesehen, die jeweils in eine Rasteinformung oder eine Rastöffnung am Gehäuseinnenumfang des Kupplungsgehäuses 7 eingreifen. Der in der Kupplungsöffnung 9 befindliche Dichtungsring 26 hat eine dichte Verbindung zwischen dem Kupplungsgegenstück 11 und der Kupplungsöffnung 9 zu gewährleisten. In die Kupplungsöffnung 8 ist ein Kupplungsgegenstück 10 einsetzbar, das bereits einen Dichtring 27 an seinem Außenumfang aufweist.

Um auch den gesetzlichen Anforderungen entgegenzukommen, weist die hier dargestellte Schlauchkupplung 5 die Patronenaufnahme 24 für die sanitäre Einsetzpatrone 25 auf. Die Schlauchkupplung 5 kann eine Farbcodierung aufweisen, die vorzugsweise als Hinweis auf in der Schlauchkupplung eingesetzte Einsetzpatronen 25 bestimmt ist. Bei dem hier dargestellten Ausführungsbeispiel trägt dazu wenigstens eines der Halteelemente 12, 13 eine zumindest sichtseitige Farbe oder Einfärbung als Farbcodierung. Auf Grund dieser Farbcodierung kann der Armaturenhersteller die stets gleiche Armatur verwenden und zur Erfüllung der jeweiligen länderspezifischen Anforderungen die entsprechende Schlauchkupplung 5 beifügen, - womit sich der logistische Aufwand für den Armaturenhersteller wesentlich verringert.

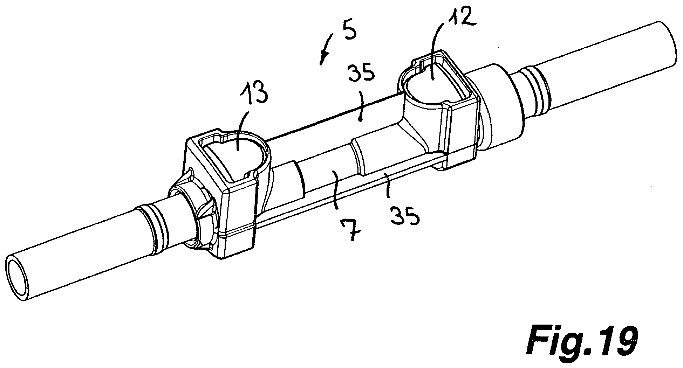

In Figur 19 ist eine weitere Ausführungsform dargestellt, die im Wesentlichen der Schlauchkupplung 5 in den Figuren 1 bis 18 entspricht. Jedoch weist die in Figur 19 gezeigte Schlauchkupplung 5, dass am Gehäuseaußenumfang zumindest eine Versteifungsrippe (35) vorgesehen sein kann und dass vorzugsweise wenigstens eine der Versteifungsrippen (35) die Tasteraufnahmen (18, 19) miteinander verwindet. Dabei wirken die Versteifungsrippen (35) Querbelastungen entgegen, die quer zur Längserstreckung der in Figur 19 gezeigten Schlauchkupplung 5 auf das Kupplungsgehäuse 7 einwirken können.

Die hier dargestellte Schlauchkupplung 5 wird hier nur beispielhaft zum Anschluss der Auslaufarmatur 4 an das Wasserversorgungsnetz gezeigt, jedoch beschränkt sich die Verwendung dieser Schlauchkupplung 5 nicht allein auf die Verbindung von Mischbatterien und Auszugsbrausen.

### Bezugszeichenliste

- 1: sanitäre Auslaufarmatur
- 2: Auslaufrohr
- 3: flexible Schlauchleitung
- 4: Brausekopf
- 5: Schlauchkupplung
- 6: Leitungsabschnitt
- 7: Kupplungsgehäuse
- 8: Kupplungsöffnung
- 9: Kupplungsöffnung
- 10: Kupplungsgegenstück
- 11: Kupplungsgegenstück
- 12: Halteelement
- 13: Halteelement
- 14: Schiebekanal
- 15: Schiebekanal
- 16: Betätigungstaster
- 17: Betätigungstaster
- 18: Tasteraufnahme
- 19: Tasteraufnahme
- 20: Ringabsatz
- 21: Ringabsatz
- 22: Ringflansch
- 23: Ringnut
- 24: Patronenaufnahme
- 25: Einsetzpatrone
- 26: Dichtungsring
- 27: Dichtungsring
- 28: Durchstecköffnung
- 29: Auflaufschräge
- 30: Federsteg
- 31: Ringflansch
- 32: Ringabsatz
- 33: Einschubhülse
- 34: Rastvorsprünge
- 35: Versteifungsrippe

## Patentansprüche

1. Schlauchkupplung (5) mit einem Kupplungsgehäuse (7), das (7) zumindest zwei Kupplungsöffnungen (8, 9) hat, die im Kupplungsgehäuse (7) miteinander verbunden sind, sowie mit mindestens zwei Kupplungsgegenstücken (10, 11), die jeweils in eine der Kupplungsöffnungen (8, 9) einsetzbar und lösbar fixierbar sind, welche Kupplungsgegenstücke (10, 11) als Leitungsende eines Leitungsabschnitts (3, 6) ausgebildet sind und von denen wenigstens ein Kupplungsgegenstück (10, 11) als Leitungsende einer flexiblen Schlauchleitung (3) vorgesehen ist, **dadurch gekennzeichnet, dass** die Kupplungsöffnungen (8, 9) unterschiedlich ausgestaltet sind zum Einsetzen nur des zugeordneten und entsprechend geformten Kupplungsgegenstücks (10, 11), dass im Kupplungsgehäuse (7) zwischen den Kupplungsöffnungen (8, 9) mindestens eine sanitäre Einsetzpatrone (25) eingesetzt ist, und dass die mindestens eine sanitäre Einsetzpatrone (25) als Durchflussmengenregler, Durchflussbegrenzer und/oder als Rückflussverhinderer ausgebildet ist.

2. Schlauchkupplung nach Anspruch 1, **dadurch gekennzeichnet, dass** das vorzugsweise hülsenförmige Kupplungsgehäuse (7) an seinen Gehäuseenden stirnseitig jeweils eine Kupplungsöffnung (8, 9) aufweist.

3. Schlauchkupplung nach Anspruch 1 oder 2, **dadurch gekennzeichnet, dass** jeder Kupplungsöffnung (8, 9) ein Halteelement (12, 13) zugeordnet ist, welche Halteelemente (12, 13) zwischen einer Entriegelungsstellung und einer Verriegelungsstellung bewegbar sind, in welcher Verriegelungsstellung das betreffende Halteelement (12; 13) das zugeordnete Kupplungsgegenstück (10; 11) in der Kupplungsöffnung (8; 9) fixiert.

4. Schlauchkupplung nach einem der Ansprüche 1 bis 3, **dadurch gekennzeichnet, dass** zumindest ein Halteelement (12, 13) durch Drücken vorzugsweise gegen eine Rückstellkraft von der Verriegelungs- in die Entriegelungsstellung bewegbar ist.

5. Schlauchkupplung nach einem der Ansprüche 1 bis 4, **dadurch gekennzeichnet, dass** das Kupplungsgehäuse (7) mit einer Hand umgreifbar ausgestaltet ist, und dass dabei zumindest ein Halteelement (12, 13) mit dem Daumen dieser Hand betätigbar ist.

6. Schlauchkupplung nach einem der Ansprüche 3 bis 5, **dadurch gekennzeichnet, dass** zumindest ein Halteelement (12, 13) als Halteschieber ausgebildet ist, der in einem quer zur Einsetzrichtung des Kupplungsgegenstücks (10, 11) orientierten und die zugeordnete Kupplungsöffnung (8, 9) durchsetzenden Schiebekanal (28) zwischen der Entriegelungsstellung und der Verriegelungsstellung verschieblich geführt ist.

7. Schlauchkupplung nach Anspruch 4 bis 6, **dadurch gekennzeichnet, dass** zumindest ein Schieberende des Halteschiebers als ein Betätigungstaster (16, 17) ausgebildet ist und dass dieser Betätigungstaster (16, 17) seitlich am Kupplungsgehäuse (7) beaufschlagbar und vorzugsweise in einer Tasteraufnahme (18, 19) angeordnet ist.

8. Schlauchkupplung nach Anspruch 6 oder 7, **dadurch gekennzeichnet, dass** an zumindest einem Halteschieber wenigstens ein Federsteg (30) angeformt ist, der als Rückstellkraft dient und dazu sich beim Drücken auf den Halteschieber mit seinem freien Stegende gegen das Kupplungsgehäuse (7) abstützt und unter elastischer Verformung vorspannt.

9. Schlauchkupplung nach einem der Ansprüche 4 bis 8, **dadurch gekennzeichnet, dass** die Rückstellkraft derart auf das Halteelement (12, 13) einwirkt, dass das Halteelement (12, 13) bei Druckentlastung und Einsetzen des Kupplungsgegenstücks (10, 11) in die Kupplungsöffnung (8, 9) deutlich hörbar von der Entriegelungsstellung in die Verriegelungsstellung zurückspringt.

10. Schlauchkupplung nach einem der Ansprüche 3 bis 9, **dadurch gekennzeichnet, dass** an zumindest einem Kupplungsgegenstück ein Hinterschnitt vorgesehen ist, den das zugeordnete Halteelement (12, 13) in der Verriegelungsstellung hintergreift.

11. Schlauchkupplung nach einem der Ansprüche 1 bis 10, **dadurch gekennzeichnet, dass** an zumindest einem Kupplungsgegenstück (10, 11) ein umlaufender Ringabsatz (20, 21) vorgesehen ist, der einen Hinterschnitt bildet.

12. Schlauchkupplung nach einem der Ansprüche 6 bis 11, **dadurch gekennzeichnet, dass** zumindest einer der Halteschieber eine Durchstecköffnung (28) aufweist, und dass am Kupplungsgegenstück (10,11) und/oder an dem die Durchstecköffnung (28) umgrenzenden Randbereich des Halteschiebers eine Auflaufschräge (29) vorgesehen ist, die (29) eine Einsetzbewegung des Kupplungsgegenstücks (10, 11) in die Durchstecköffnung (28) in eine Schiebebewegung des Halteschiebers von der Verriegelungsstellung in die Entriegelungsstellung umsetzt.

13. Schlauchkupplung nach einem der Ansprüche 1 bis 12, **dadurch gekennzeichnet, dass** das Kupplungsgehäuse (7) als Kunststoffspritzgussteil ausgebildet und/oder dass wenigstens ein Kupplungsgegenstück (10, 11) aus Metall und insbesondere aus Messing hergestellt ist.

14. Schlauchkupplung nach einem der Ansprüche 3 bis 9, **dadurch gekennzeichnet, dass** jedes Kupplungsgegenstück (10, 11) als Leitungsende einer flexiblen Schlauchleitung vorgesehen ist.

15. Schlauchkupplung nach einem der Ansprüche 1 bis 14, **dadurch gekennzeichnet, dass** im Bereich zumindest einer Kupplungsöffnung (9) wenigstens eine Ringdichtung vorgesehen ist, die zwischen dem Gehäuseinnenumfang des Kupplungsgehäuses (7) und dem in diese Kupplungsöffnung (9) eingeschobenen Kupplungsgegenstück 11 abdichtet.

16. Schlauchkupplung nach Anspruch 15, **dadurch gekennzeichnet, dass** die wenigstens eine Ringdichtung zwischen einem am Gehäuseinnenumfang vorgesehenen Ringabsatz (32) und einer Einschubhülse (33) axial gesichert ist, welche Einschubhülse (33) in die Kupplungsöffnung (9)einsetzbar und am Gehäuseinnenumfang des Kupplungsgehäuses (7) fixierbar ist.

17. Schlauchkupplung nach einem der Ansprüche 1 bis 16, **dadurch gekennzeichnet, dass** die Schlauchkupplung eine Farbcodierung vorzugsweise als Hinweis auf in der Schlauchkupplung eingesetzte Einsetzpatronen (25) aufweist, und dass dazu insbesondere wenigstens ein Halteelement (12, 13) eine zumindest sichtseitige Farbe oder Einfärbung als Farbcodierung trägt.

18. Schlauchkupplung nach einem der Ansprüche 1 bis 17, **dadurch gekennzeichnet, dass** am Gehäuseaußenumfang zumindest eine Versteifungsrippe (35) vorgesehen ist und dass vorzugsweise wenigstens eine der Versteifungsrippen (35) die Tasteraufnahmen (18, 19) miteinander verbindet.

## Claims

1. Hose coupling (5) comprising a coupling housing (7) which has at least two coupling openings (8, 9) which are connected to one another in the coupling housing (7), and comprising at least two coupling mating pieces (10, 11) which can each be inserted into one of the coupling openings (8, 9) and can be releasably fixed therein, which coupling mating pieces (10, 11) are designed as line ends of a line section (3, 6), and of which at least one coupling mating piece (10, 11) is provided as the line end of a flexible hose line (3), **characterised in that** the coupling openings (8, 9) are configured differently for insertion of only the allocated and correspondingly formed coupling mating piece (10, 11), that at least one sanitary insert cartridge (25) is inserted in the coupling housing (7) between the coupling openings (8, 9), and that the at least one sanitary insert cartridge (25) is designed as a flow regulator, a flow restrictor and/or a backflow preventer.

2. Hose coupling as claimed in claim 1, **characterised in that** the preferably sleeve-shaped coupling housing (7) has a coupling opening (8, 9) in each case on an end face of its housing ends.

3. Hose coupling as claimed in claim 1 or 2, **characterised in that** each coupling opening (8, 9) is allocated a holding element (12, 13), which holding elements (12, 13) are movable between an unlocking position and a locking position, in which locking position the respective holding element (12; 13) fixes the allocated coupling mating piece (10; 11) in the coupling opening (8; 9).

4. Hose coupling as claimed in any one of claims 1 to 3, **characterised in that** at least one holding element (12, 13) is movable from the locking position to the unlocking position by applying pressure preferably against a restoring force.

5. Hose coupling as claimed in any one of claims 1 to 4, **characterised in that** the coupling housing (7) is designed to be grasped in one hand, and that at least one holding element (12, 13) is actuatable by the thumb of this hand.

6. Hose coupling as claimed in any one of claims 3 to 5, **characterised in that** at least one holding element (12, 13) is designed as a holding slide which is guided in a displaceable manner between the unlocking position and the locking position in a slide channel (28) which is oriented transversely with respect to the insertion direction of the coupling mating pieces (10, 11) and passes through the allocated coupling opening (8, 9).

7. Hose coupling as claimed in claims 4 to 6, **characterised in that** at least one slide end of the holding slide is designed as an actuating button (16, 17), and that this actuating button (16, 17) can be acted upon laterally on the coupling housing (7) and is arranged preferably in a button seat (18, 19).

8. Hose coupling as claimed in claim 6 or 7, **characterised in that** integrally formed on at least one holding slide is at least one resilient web (30) which serves to provide a restoring force and, when pressure is applied to the holding slide, is supported with its free web end against the coupling housing (7) and is pretensioned with elastic deformation.

9. Hose coupling as claimed in any one of claims 4 to 8, **characterised in that** the restoring force acts on the holding element (12, 13) in such a way that, when the pressure is released and the coupling mating piece (10, 11) is inserted into the coupling opening (8, 9), the holding element (12, 13) springs back in a clearly audible manner from the unlocking position to the locking position.

10. Hose coupling as claimed in any one of claims 3 to 9, **characterised in that** provided on at least one of the coupling mating pieces is an undercut, behind which the allocated holding element (12, 13) engages in the locking position.

11. Hose coupling as claimed in any one of claims 1 to 10, **characterised in that** provided on at least one coupling mating piece (10, 11) is a peripheral annular shoulder (20, 21) which forms an undercut.

12. Hose coupling as claimed in any one of claims 6 to 11, **characterised in that** at least one of the holding slides has a plug-through opening (28), and that a run-on bevel (29) is provided on the coupling mating piece (10, 11) and/or on the edge region of the holding slide defining the plug-through opening (28), and by means of the run-on bevel (29) an insertion movement of the coupling mating piece (10, 11) into the plug-through opening (28) is converted into a sliding movement of the holding slide from the locking position to the unlocking position.

13. Hose coupling as claimed in any one of claims 1 to 12, **characterised in that** the coupling housing (7) is designed as a plastics injection-moulded part and/or that at least one coupling mating piece (10, 11) is produced from metal and in particular from brass.

14. Hose coupling as claimed in any one of claims 3 to 9, **characterised in that** each coupling mating piece (10, 11) is provided as a line end of a flexible hose line.

15. Hose coupling as claimed in any one of claims 1 to 14, **characterised in that** provided in the region of at least one coupling opening (9) is at least one ring seal which provides a seal between the housing inner circumference of the coupling housing (7) and the coupling mating piece 11 inserted into this coupling opening (9).

16. Hose coupling as claimed in claim 15, **characterised in that** the at least one ring seal is secured axially between an annular shoulder (32) provided on the housing inner circumference and an insertion sleeve (33), which insertion sleeve (33) can be inserted into the coupling opening (9) and fixed on the housing inner circumference of the coupling housing (7).

17. Hose coupling as claimed in any one of claims 1 to 16, **characterised in that** the hose coupling has a colour coding preferably as an indicator of the insert cartridges (25) inserted in the hose coupling, and that in particular in this respect at least one holding element (12, 13) has a paint or dye as colour coding on at least a visible side.

18. Hose coupling as claimed in any one of claims 1 to 17, **characterised in that** provided on the housing outer circumference is at least one stiffening rib (35) and that preferably at least one of the stiffening ribs (35) connects the button seats (18, 19) to one another.

## Revendications

1. Raccord de tuyau souple (5) avec un corps de raccord (7), qui (7) comporte au moins deux ouvertures de raccord (8, 9) qui sont reliées l'une à l'autre dans le corps de raccord (7), ainsi qu'avec au moins deux pièces de raccord opposées (10, 11), qui peuvent être insérées et fixées de façon amovible respectivement dans l'une des ouvertures de raccord (8, 9), pièces de raccord opposées (10, 11) qui sont réalisées en forme d'extrémité de conduite d'une partie de conduite (3, 6) et dont au moins une pièce de raccord opposée (10, 11) est réalisée en forme d'extrémité de conduite d'une conduite en tuyau flexible (3), **caractérisé en ce que** les ouvertures de raccord (8, 9) sont configurées différemment pour l'insertion uniquement de la pièce de raccord opposée (10, 11) associée et de forme correspondante, **en ce qu'**au moins une cartouche d'insertion sanitaire (25) est insérée dans le corps de raccord (7) entre les ouvertures de raccord (8, 9) et **en ce que** ladite au moins une cartouche d'insertion sanitaire (25) est constituée par un régulateur de débit, un limiteur de débit et/ou un dispositif anti-retour.

2. Raccord de tuyau souple selon la revendication 1, **caractérisé en ce que** le corps de raccord (7) de préférence en forme de douille présente frontalement à ses extrémités de corps respectivement une ouverture de raccord (8, 9).

3. Raccord de tuyau souple selon la revendication 1 ou 2, **caractérisé en ce qu'**un élément de maintien (12, 13) est associé à chaque ouverture de raccord (8, 9), éléments de maintien (12, 13) qui sont déplaçables entre une position de déverrouillage et une position de verrouillage, position de verrouillage dans laquelle l'élément de maintien concerné (12 ; 13) fixe la pièce de raccord opposée associée (10 ; 11) dans l'ouverture de raccord (8 ; 9).

4. Raccord de tuyau souple selon l'une quelconque des revendications 1 à 3, **caractérisé en ce qu'**au moins un élément de maintien (12, 13) est déplaçable de la position de verrouillage à la position de déverrouillage par pression de préférence

5. Raccord de tuyau souple selon l'une quelconque des revendications 1 à 4, **caractérisé en ce que** le corps de raccord (7) est réalisé de façon à être saisissable avec une main et **en ce qu'**au moins un élément de maintien (12, 13) peut en l'occurrence être actionné avec le pouce de cette main.

6. Raccord de tuyau souple selon l'une quelconque des revendications 3 à 5, **caractérisé en ce qu'**au moins un élément de maintien (12, 13) est formé par un curseur de maintien qui est guidé de façon glissante dans un canal de glissement (28) orienté transversalement à la direction d'insertion de la pièce de raccord opposée (10, 11) et traversant l'ouverture de raccord associée (8, 9) entre la position de déverrouillage et la position de verrouillage.

7. Raccord de tuyau souple selon l'une quelconque des revendications 4 à 6, **caractérisé en ce qu'**au moins une extrémité de curseur du curseur de maintien est formée par une touche d'actionnement (16, 17) et **en ce que** cette touche d'actionnement (16, 17) est activable latéralement sur le corps de raccord et est disposée de préférence dans un logement de touche (18, 19).

8. Raccord de tuyau souple la revendication 6 ou 7, **caractérisé en ce qu'**au moins une nervure élastique (30) est formée sur au moins un curseur de maintien, laquelle sert de force de rappel et prend appui à cet effet, lors de la pression sur le curseur de maintien, par son extrémité de nervure libre contre le corps de raccord (7) et se précontraint par une déformation élastique.

9. Raccord de tuyau souple selon l'une quelconque des revendications 4 à 8, **caractérisé en ce que** la force de rappel agit sur l'élément de maintien (12, 13) de telle manière que l'élément de maintien (12, 13) saute de façon nettement audible de la position de déverrouillage à la position de verrouillage lors du relâchement de la pression et de l'insertion de la pièce de raccord opposée (10, 11) dans l'ouverture

10. Raccord de tuyau souple selon l'une quelconque des revendications 3 à 9, **caractérisé en ce qu'**il est prévu sur au moins une pièce de raccord opposée une contre-dépouille, derrière laquelle l'élément de maintien associé (12, 13) s'accroche dans la position de verrouillage.

11. Raccord de tuyau souple selon l'une quelconque des revendications 1 à 10, **caractérisé en ce qu'**il est prévu sur au moins une pièce de raccord opposée (10, 11) un épaulement annulaire périphérique (20, 21) qui forme une contre-dépouille.

12. Raccord de tuyau souple selon l'une quelconque des revendications 6 à 11, **caractérisé en ce qu'**au moins l'un des curseurs de maintien présente une ouverture d'embrochage (28) et **en ce qu'**il est prévu sur la pièce de raccord opposée (10, 11) et/ou sur la région de bord du curseur de maintien entourant l'ouverture d'embrochage (28) une rampe d'entrée (29) qui (29) convertit un mouvement d'insertion de la pièce de raccord opposée (10, 11) dans l'ouverture d'embrochage (28) en un mouvement de glissement du curseur de maintien de la position de verrouillage à la position de déverrouillage.

13. Raccord de tuyau souple selon l'une quelconque des revendications 1 à 12, **caractérisé en ce que** le corps de raccord (7) est formé par une pièce moulée par injection en matière plastique et/ou **en ce qu'**au moins une pièce de raccord opposée (10, 11) est fabriquée en métal et en particulier en laiton.

14. Raccord de tuyau souple selon l'une quelconque des revendications 3 à 9, **caractérisé en ce que** chaque pièce de raccord opposée (10, 11) est prévue sous forme d'extrémité de conduite d'une conduite en tuyau flexible.

15. Raccord de tuyau souple selon l'une quelconque des revendications 1 à 14, **caractérisé en ce qu'**il est prévu dans la région d'au moins une ouverture de raccord (9) au moins un joint d'étanchéité annulaire qui assure l'étanchéité entre le pourtour intérieur de corps du corps de raccord (7) et la pièce de raccord opposée (11) insérée dans cette ouverture de raccord (9).

16. Raccord de tuyau souple selon la revendication 15, **caractérisé en ce que** ledit au moins un joint d'étanchéité annulaire est fixé axialement entre un épaulement annulaire (32) prévu sur le pourtour intérieur de corps et une douille d'insertion (33), douille d'insertion (33) qui peut être insérée dans l'ouverture de raccord (9) et qui peut être fixée au pourtour intérieur de corps du corps de raccord (7).

17. Raccord de tuyau souple selon l'une quelconque des revendications 1 à 16, **caractérisé en ce que** le raccord de tuyau souple présente un codage de couleur de préférence à titre d'indication d'une cartouche d'insertion (25) insérée dans le raccord de tuyau souple et **en ce qu'**en particulier au moins un élément de maintien (12, 13) porte à cet effet une couleur ou une coloration au moins du côté visible à titre de codage de couleur.

18. Raccord de tuyau souple selon l'une quelconque des revendications 1 à 17, **caractérisé en ce qu'**il est prévu sur le pourtour extérieur de corps au moins une nervure de renforcement (35) et de préférence **en ce qu'**au moins l'une des nervures de renforcement (35) relie l'un à l'autre les logements de touches (18, 19).
